# EUROPÄISCHE PATENTSCHRIFT

(11) **EP 1 690 409 B1**
(45) Veröffentlichungstag und Bekanntmachung des Hinweises auf die Patenterteilung: **10.02.2010**
(21) Anmeldenummer: 04797408.4
(22) Anmeldetag: 03.11.2004
(51) Int. Cl.: H04M 1/60, H04M 1/04, B60R 11/02, H04B 1/38

(54) **FREISPRECHEINRICHTUNG ZUM BETREIBEN VON MOBILFUNKGERÄTEN UNTERSCHIEDLICHEN TYPS**
HANDS-FREE DEVICE FOR OPERATING DIFFERENT TYPES OF MOBILE RADIO DEVICES
DISPOSITIF MAINS LIBRES POUR FAIRE FONCTIONNER DES DISPOSITIFS RADIO MOBILES DE DIFFERENTS TYPES

(30) Priorität: 03.11.2003 DE 10351703
(43) Veröffentlichungstag der Anmeldung: 16.08.2006
(73) Patentinhaber: Funkwerk Dabendorf GmbH, 15806 Dabendorf (DE)
(72) Erfinder: REDLICH, Volkmar, 15836 Klausdorf (DE); HEYDER, Frank, 12623 Berlin (DE); WARDA, Andreas, 15827 Dahlewitz (DE); ZANDER, Michael, 15806 Glienick (DE)
(74) Vertreter: Schubert, Klemens
(86) Internationale Anmeldenummer: PCT/DE2004/002454
(87) Internationale Veröffentlichungsnummer: WO 2005/046190

(56) Entgegenhaltungen:
- WO-A-02/33949
- WO-A-02/096069
- DE-A1- 10 215 928
- US-A1- 2002 198 031

## Beschreibung

Die Erfindung betrifft eine Telekommunikationseinrichtung zum Betreiben von Mobilfunkendgeräten unterschiedlichen Gerätetyps in einem Kraftfahrzeug. Ihr Gegenstand bezieht sich vorzugsweise auf eine Freisprecheinrichtung für Mobiltelefone, ohne jedoch auf Einrichtungen zur reinen Sprachübertragung beschränkt zu sein. Vielmehr sind gattungsgemäße Einrichtungen vergleichbarer Art, wie Telematiksysteme, welche auch Mobilfunknetze nutzen und dabei teilweise mit Mobilfunkendgeräten betrieben werden, bei denen es sich nicht zwingend um Mobiltelefone im herkömmlichen Sinne, sondern beispielsweise um entsprechend ausgestattete, also gegebenenfalls mit einem Funkmodem ausgerüstete PDAs' oder Laptops handelt, ebenfalls vom Gegenstand der Erfindung umfasst. Selbstverständlich umfasst die Erfindung somit auch Einrichtungen, die zwar als Freisprecheinrichtungen bezeichnet werden, aber, ebenso wie Mobiltelefone, in der Regel neben der Sprachübertragung auch die Datenübertragung über Mobilfunknetze ermöglichen.

Insbesondere bezieht sich die Erfindung auf eine universelle Telekommunikationseinrichtung, welche aus einer bezüglich des jeweils zu betreibenden Mobilfunkendgerätes typunabhängigen Grundeinheit und einem von mehreren typspezifischen Adaptern besteht, welche jeweils den Betrieb eines Mobilfunkendgerätes eines bestimmten Gerätetyps oder eines Mobilfunkendgerätes aus einer Gruppe von Gerätetypen mit der Grundeinheit ermöglichen. Dabei verfügt jeder der typspezifischen Adapter über ein Interface zur Anpassung der elektrischen Spezifikationen (Anschlussbelegungen, Signalpegel, etc.) eines Mobilfunkendgerätes an die Steuereinheit, so dass je nach einbezogenem Adapter Mobilfunkendgeräte unterschiedlicher Art mit der Telekommunikationseinrichtung betreibbar sind. Soweit Mobilfunkendgeräte drahtlos mit der erfindungsgemäßen Telekommunikationseinrichtung betrieben werden, wird dabei jedoch vorausgesetzt, dass es sich um Mobilfunkendgeräte, also beispielsweise Bluetooth-Handys handelt, welche das Sim-Access-Profile (SAP) oder ein gleichwertiges bzw. entsprechendes Profil unterstützen. Im Falle einer drahtgebundene Ankopplung eines Mobilfunkendgerätes, dient der dafür verwendete Adapter, durch eine entsprechende geometrische Ausbildung, vorzugsweise außerdem der mechanischen Halterung des jeweiligen Mobilfunkendgerätes.

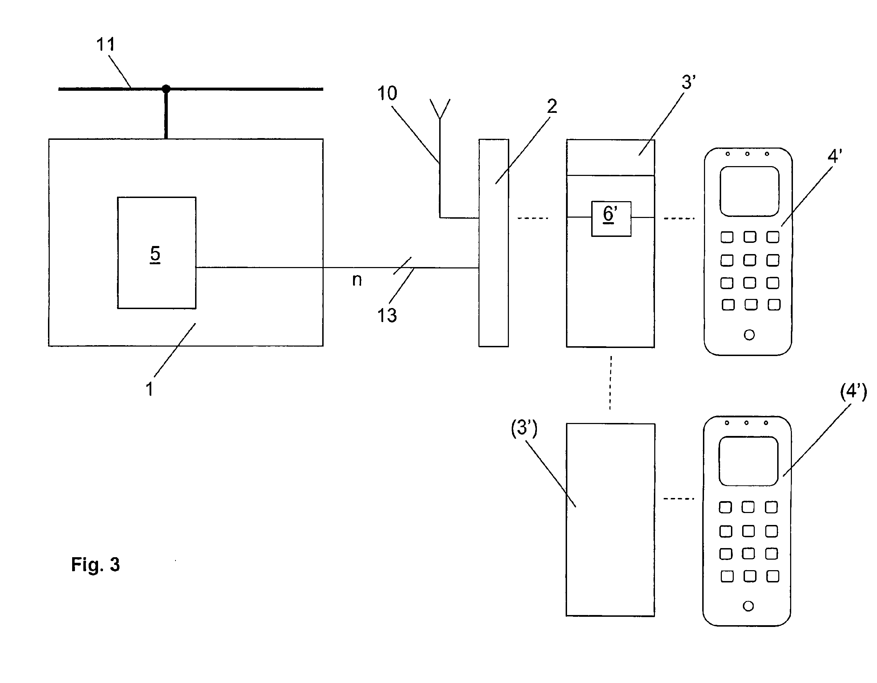

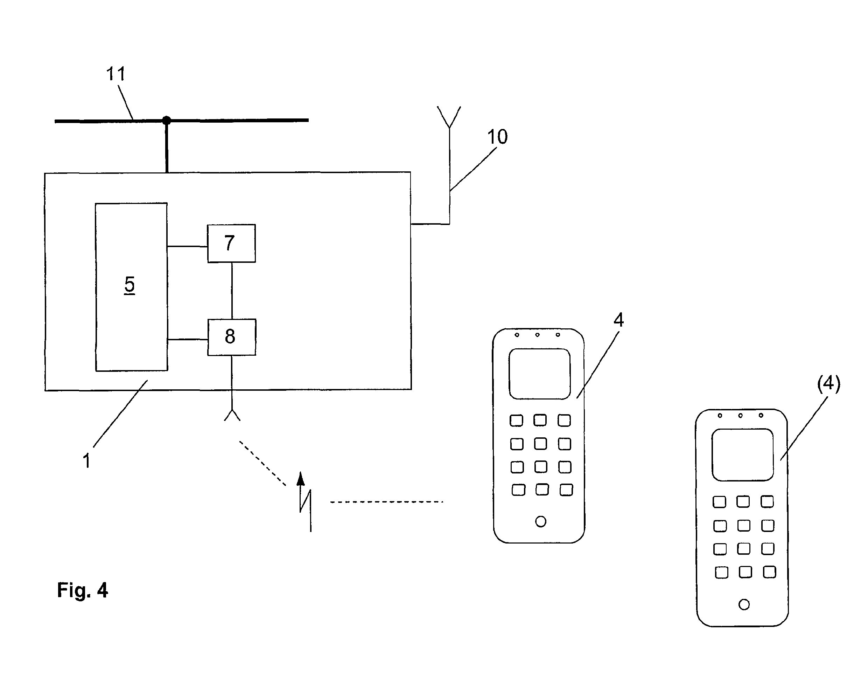

Aufgrund der starken Verbreitung von Mobitfunkendgeräten, insbesondere Handys, und entsprechender gesetzlicher Regelungen haben Tetekpmmunikationseinrichtungen zur freihändigen Benutzung von Mobilfunkendgeräten in Fahrzeugen eine große Bedeutung erlangt. Geräte, respektive Freisprecheinrichtungen, der ersten Generation waren für jeweils einen bestimmten Handytyp ausgelegt. Dies bedeutete aber auch, dass bei einem Wechsel des Mobiltelefons eine neue Freisprecheinrichtung angeschafft und - sofern es sich um eine Einrichtung zur festen Installation im Fahrzeug handelte - eingebaut werden musste. Zudem ergaben sich Schwierigkeiten bei der Nutzung von Freisprecheinrichtungen beispielsweise in Dienstfahrzeugen, die von mehreren mit unterschiedlichen Mobiltelefonen ausgestatteten Personen benutzt wurden. Daher ging man schnell dazu über, Freisprecheinrichtungen, die daneben in der Folge auch zu Telekommunikationseinrichtungen mit über die Sprachübertragung hinausgehenden Funktionen erweitert wurden, so auszulegen, dass sie variabel mit verschiedenen Typen von Mobilfunkendgeräten zusammenarbeiten konnten. Nach dem Stand der Technik bestehen solche Telekommunikationseinrichtungen, sofern sie zur drahtgebundenen Ankopplungen von Mobitfunkendgeräten ausgelegt sind, im Allgemeinen aus einer so genannten Elektronikbox zur grundsätzlichen Steuerung der Funktionalität der Einrichtung, einer am Fahrzeug zu befestigenden Grundplatte und einem mobilfunkendgerätespezifischen, auf die Grundplatte aufzusteckenden Haltesystem mit entsprechenden elektronischen Schnittstelleneinheiten (siehe hierzu Fig. 3). Ausführungsvarianten zum drahtlosen Betreiben von Mobilfunkendgeräten (siehe Fig. 4) bestehen ebenfalls aus einer, mit der Fahrzeugelektronik beispielsweise über einen Fahrzeugbus zu verbindenden Elektronikbox, die jedoch in diesem Falle um eine zusätzliche Baugruppe zur drahtlosen Kommunikation, beispielsweise via Bluetooth mit dem Mobilfunkendgerät, beispielsweise einem Handy, erweitert ist. Drahtgebundenen Lösungen gemäß dem in Fig. 3 gezeigten Beispiel haftet der Nachteil an, dass an Elektronikboxen mit einem durch die Darstellung gezeigten und später noch erläuterten Aufbau ein drahtloses Betreiben, beispielsweise eines Bluetooth-Handys, nicht ohne weiteres möglich ist und somit der Nutzer beim Erwerb eines entsprechenden Mobilfunkendgerätes in der Regel die Elektronikbox auswechseln muss. Umgekehrt ist bei den bisher bekannt gewordenen Lösungen für Mobilfunkendgeräte der letztgenannten Art, wie beispielsweise eine durch die DE 10 215 928 A1 beschrieben wird, eine Möglichkeit zur drahtgebundenen Ankopplung eines nicht über eine Funkschnittstelle verfügenden Mobilfunkendgerätes im Allgemeinen nicht gegeben. Zudem ist eine mechanische Halterung für ein drahtgebunden zu betreibendes Mobilfunkendgerät regelmäßig nicht vorgesehen, da etwa ein Bluetooth-Handy beim Betrieb mit einer solchen Telekommunikationseinrichtung beispielsweise in einer Jackentasche des Benutzers verbleiben kann.

Dem gegenüber wird durch die WO 02/096069 A2 eine mit Mobilfunkendgeräten unterschiedlichen Typs betreibbare Telekommunikationseinrichtung beschrieben, welche vorzugsweise zur Verwendung mit drahtgebunden angekoppelten Mobilfunkendgeräten ausgebildet ist, aber offenbar auch den drahtlosen Betrieb mit einem Mobilfunkendgerät ermöglicht. Allerdings ist eine solche drahtlose Nutzung der Telekommunikationseinrichtung im Zusammenhang mit der Telekommunikation in einem Mobilfunknetz aufgrund der in der Schrift beschriebenen Ausbildung der Telekommunikationseinrichtung nur unter Verwendung der internen Mobilfunksende- und Empfangseinheit des Mobilfunkendgeräts möglich. Dies ist jedoch in nachteiliger Weise mit einer Strahlenbelastung im Innern eines mit der Telekommunikationseinrichtung ausgestatteten Fahrzeugs verbunden.

Aufgabe der Erfindung ist es, eine Telekommunikationseinrichtung zum Betreiben von Mobilfunkendgeräten in einem kraftfahrzeug bereitzustellen, welche die genannten Nachteile des Standes der Technik vermeidet. Insbesondere soll die Telekommunikationseinrichtung so ausgebildet sein, dass mit ihr Mobilfunkendgeräte in Abhängigkeit von ihrer Beschaffenheit wahlweise drahtlos oder drahtgebunden betrieben werden können und dabei die im Zusammenhang mit dem Mobilfunk auftretende Strahlung aus dem Fahrzeuginnenraum ferngehalten wird. Vorzugsweise soll die Telekommunikationseinrichtung außerdem gegebenenfalls als Authentifikationseinheit zur Benutzung eines Mobilfunkaccounts durch andere Einheiten genutzt werden können. Dabei sei jedoch bemerkt, dass der drahtlose Betrieb der Telekommunikationseinrichtung mit einem entsprechenden Mobilfunkendgerät bzw. die Nutzung eines solchen Mobilfunkendgerätes zur Authentifizierung voraussetzt, dass das Mobilfunkendgerät das Sim-Access-Profile (SAP) oder ein entsprechendes Profil unterstützt. Letzteres wird bei den nachfolgenden Darstellungen und für das Verständnis der Patentansprüche, auch ohne ausdrückliche Erwähnung, jeweils unterstellt.

Die Aufgabe wird durch eine Telekommunikationseinrichtung mit den Merkmalen des Hauptanspruchs gelöst. Vorteilhafte Aus- bzw. Weiterbildungen der Erfindung sind durch die Unteransprüche gegeben.

Die erfindungsgemäße Telekommunikationseinrichtung besteht, in an sich bekannter Weise, aus einer typunabhängigen Grundeinheit und einem von mehreren typspezifischen Adaptern. Die Grundeinheit wird von einer im Kraftfahrzeug angeordneten Steuereinheit mit Steuerelektronik und einer elektrisch mit ihr verbundenen Adapteraufnahme, vorzugsweise in der Form einer am Fahrzeug montierten Grundplatte, sowie einer mit diesen Einheiten verbundenen Antenne gebildet. Jeder Adapter verfügt in ebenfalls bekannter Weise über ein Interface zur Anpassung der elektrischen Spezifikationen eines Mobilfunkendgerätes an die Steuereinheit. Dabei ist wenigstens einer der Adapter zum drahtlosen Betreiben eines entsprechend ausgebildeten Mobilfunkendgerätes mit der Telekommunikationseinrichtung ausgebildet. Gemäß der Erfindung wird dieser Adapter zum Betreiben des entsprechenden Mobilfunkendgerätes mit der Telekommunikationseinrichtung, ebenso wie die Adapter zu deren drahtgebundener Nutzung, mechanisch und elektrisch mit der Adapteraufnahme, respektive der am Fahrzeug festgelegten Grundplatte in Eingriff gebracht. In erfindungswesentlicher Weise verfügt der Adapter zur drahtlosen Nutzung der Telekommunikationseinrichtung über eine eigene Mobilfunksende- und -empfangseinheit. Beim Betrieb eines Mobitfunkendgerätes mit der Telekommunikationseinrichtung erfolgt die gesamte Telekommunikation ausschließlich über die Mobilfunksende- und -empfangseinheit dieses Adapters und nicht über die des Mobilfunkendgerätes.

Entsprechend einer möglichen Ausbildung der Erfindung ist die zum funkgebundenen Datenaustausch zwischen dem Mobilfunkendgerät und den Einheiten der Telekommunikationseinrichtung erforderliche Sende- und Empfangseinheit, welche mit einer entsprechenden Einheit des Mobilfunkendgerätes korrespondiert und nicht mit der Sende- und Empfangseinheit für die eigentliche Telekommunikation bzw. Mobilfunktelefonie zu verwechseln ist, in dem mit der Adapteraufnahme in Eingriff zu bringenden Adapter angeordnet. Gemäß einer praxisgerechten Ausbildung handelt es sich, unter Berücksichtigung des gegenwärtigen Standes der Technik, bei der Sende- und Empfangseinheit für den Datenaustausch zwischen dem Mobilfunkendgerät und den Einheiten der Telekommunikationseinrichtung um eine nach dem Bluetooth-Standard arbeitende Einheit, welche daher zur besseren Unterscheidung von der Mobilfunksende- und -empfangseinheit im Weiteren auch als Bluetooth-Einheit bezeichnet werden soll. Selbstverständlich soll dadurch jedoch in Bezug auf den Datenaustausch zwischen Telekommunikationseinrichtung und Mobilfunkendgerät im Hinblick auf andere bzw. mögliche künftige Standards zur drahtlosen Datenübertragung keine Beschränkung der Erfindung gegeben sein. Gemäß einer ebenfalls möglichen bzw. vorgesehenen Ausgestaltung der Erfindung ist die Bluetooth-Einheit oder eine damit vergleichbare Einheit in der Steuereinheit und nicht in dem Adapter angeordnet Bei dieser Ausbildung erfolgt der Datenaustausch zwischen dem Mobilfunkendgerät und dem Adapter über die Bluetooth-Einheiten von Mobilfunkendgerät und Steuereinheit sowie die elektrische Verbindung zwischen der Steuereinheit und der Adapteraufnahme mit dem auf diese aufgesteckten und/oder in diese eingerasteten Adapter.

Entsprechend dem Konzept der erfindungsgemäßen Telekommunikationseinrichtung ist wenigstens einer der mit ihr zum Betrieb eines Mobilfunkendgerätes nutzbaren Adapter zur drahtgebundenen Ankopplung des entsprechenden Mobilfunkendgerätes ausgebildet. Dieser Adapter ist dann, wie dies grundsätzlich aus dem Stand der Technik bereits bekannt ist, in seiner geometrischen bzw. mechanischen Gestaltung an das Mobilfunkendgerät angepasst, so dass dieses mittels des Adapters temporär am Kraftfahrzeug festgelegt wird. Bekannte Telekommunikationseinrichtungen, wie Freisprecheinrichtungen, verfügen über Mittel zur Speicherung von Konfigurationsdaten, beispielsweise Einträgen eines elektronischen Telefonbuchs, eines mit ihnen betrieben Mobilfunkendgerätes. Vorzugsweise soll auch die erfindungsgemäße Telekommunikationseinrichtung über derartige Speichermittel verfügen. Bevorzugt sind diese dabei in der Grundeinheit, also der Steuereinheit oder der Adapteraufnahme angeordnet. Es ist jedoch ebenso denkbar, entsprechende Speichermittel im Adapter, insbesondere auch in dem Adapter zum drahtlosen Betreiben eines Mobilfunkendgerätes mit der Telekommunikationseinrichtung anzuordnen. Im Falle eines drahtlos mit der Telekommunikationseinrichtung betriebenen Mobilfunkendgerätes werden die besagten Konfigurationsdaten vermittels der Sende- und Empfangseinheiten für den funkgebundenen Datenaustausch, respektive der Bluetooth-Einheiten, in die entsprechenden Speichermittel übertragen.

Gemäß einer bevorzugten Ausbildung der Erfindung ist die Steuereinheit als eine mit einem Fahrzeugbus und damit mit anderen elektronischen Einheiten des Fahrzeugs verbindbare Elektronikbox ausgebildet.

Die Erfindung soll nachfolgend anhand von Ausführungsbeispielen, welche sich vorzugsweise auf die Freisprechfunktion einer insoweit als Freisprecheinrichtung bezeichneten Telekommunikationseinrichtung beziehen, ohne jedoch auf diese Funktion beschränkt zu sein, nochmals näher erläutert werden. In den zugehörigen Zeichnungen zeigen:
- Fig.1:: Eine grundsätzliche Ausführungsform der erfindungsgemäßen Telekommunikationseinrichtung zur Benutzung mit Mobiltelefonen unterschiedlichen Typs.
- Fig. 2:: Eine Modifikation der Ausführungsform nach Fig. 1 mit einer in die Elektronikbox integrierten Sende- und Empfangseinheit zum drahtlosen Datenaustausch mit einem Mobilfunkendgerät.
- Fig.3:: Eine Freisprecheinrichtung nach dem Stand der Technik zur drahtgebundenen Ankopplung unterschiedlicher Mobiltelefone.
- Fig. 4:: Eine Freisprecheinrichtung nach dem Stand der Technik zum draht- losen Betreiben von Mobiltelefonen.

Nachfolgend soll zunächst kurz auf den Stand der Technik gemäß den Fig. 3 und Fig. 4 eingegangen werden. Die Fig. 3 zeigt eine gebräuchliche Ausführungsform einer Freisprecheinrichtung, bei welcher über eine entsprechende Anzahl unterschiedlicher Adapter 3' verschiedene Mobiltelefontypen 4' drahtgebunden an eine Steuereinheit 1 bzw. Elektronikbox zur Bereitstellung der eigentlichen Freisprechfunktionen angekoppelt werden können und im Zuge dessen von dem entsprechenden, geometrisch angepassten Adapter 3' auch mechanisch gehalten werden. Vermittels eines in den Adaptern 3 jeweils vorgesehenen, hier nicht dargestellten Interfaces erfolgt die Anpassung zwischen Handy und Steuereinheit auf der elektrisch/elektronischen Ebene, im Hinblick auf unterschiedliche Anschlussbelegungen und/oder Signalpegel. Die Telekommunikation erfolgt unter Nutzung der hier ebenfalls nicht dargestellten Mobilfunksende- und -empfangseinheit des Mobilfunkendgerätes 3'. Eine drahtlose Ankopplung, beispielsweise eines Bluetooth-Handys, an die Steuereinheit 1 ist bei dieser Ausführungsform dem Grunde nach nicht vorgesehen.

Durch die Fig. 4 ist eine aus dem Stand der Technik bekannte Ausführungsform einer Freisprecheinrichtung zum drahtlosen Betreiben eines Mobilfunkendgerätes 4, vorzugsweise via Bluetooth, schematisch dargestellt. Bei dieser Lösung wird, gemäß dem Beispiel, ein Handy unmittelbar und ohne Adapter an die Steuereinheit 1 angekoppelt. Der Datenaustausch zwischen dem Mobilfunkendgerät 4 (Mobiltelefon) und der Steuereinheit erfolgt per Funk unter Nutzung des Bluetooth-Standards mittels dazu im Mobilfunkendgerät 4 und in der Steuereinheit angeordneter Sende- und Empfangseinheiten zur Datenübertragung. Zur Nutzung in einem Mobilfunknetz ist in der mit der Antenne verbundenen Steuereinheit außerdem eine Mobilfunksende- und -empfangseinheit angeordnet. Die für das Senden im Mobilfunknetz erforderliche Strahlung entsprechender Sendeleistung wird dabei durch die Anordnung einer Mobilfunksende- und -empfangseinheit in der Elektronikbox und deren unmittelbare Verbindung mit der Antenne weitgehend aus dem Innern des Fahrzeugraums ferngehalten. Das Mobilfunkendgerät 4 kann beispielsweise in der Tasche seines Benutzers verbleiben.

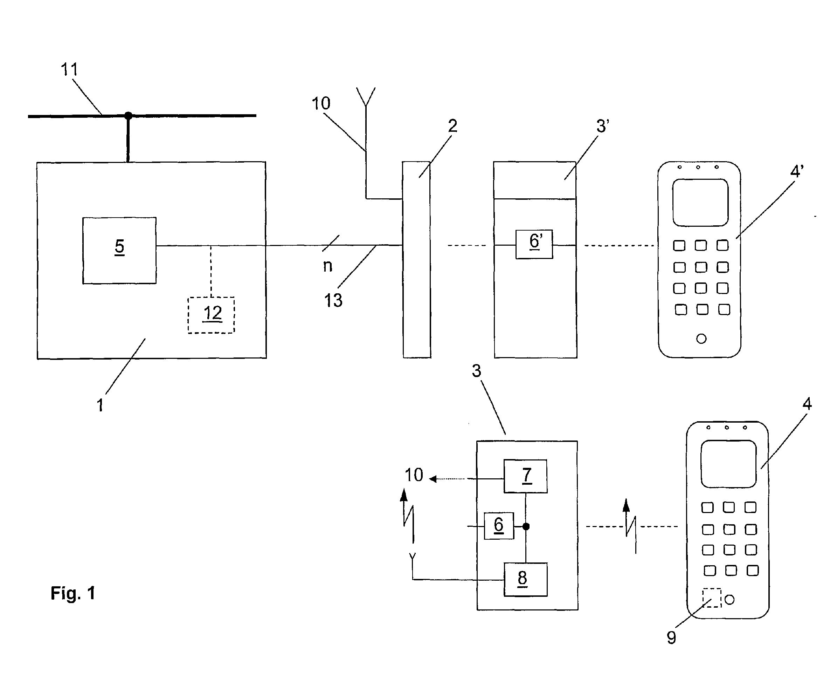

Die Fig. 1 zeigt die schematische Darstellung einer grundsätzlichen Ausführungsform der Erfindung. Die erfindungsgemäße Telekommunikationseinrichtung, hier in ihrer Funktion als Freisprecheinrichtung für Mobiltelefone dargestellt, besteht aus einer typunabhängigen Grundeinheit 1, 2 mit einer externen Antenne 10 und einem aus einer Mehrzahl von Adaptern 3, 3' entsprechen dem Typ des mit der Freisprecheinrichtung zu betreibenden Mobilfunkendgerätes 4, 4' auszuwählenden Adapter 3, 3'. Die Grundeinheit 1, 2 wird von einer an den Fahrzeugbus 11 angeschlossenen Steuereinheit 1 bzw. Elektronikbox mit der Steuerelektronik 5 und einer mit ihr über ein mehradriges Kabel 13 elektrisch verbundenen am Fahrzeug montierten Adapteraufnahme 2 bzw. Grundplatte gebildet. Der jeweilige typabhängige Adapter 3, 3' ist auf die Grundplatte 2 aufsteckbar und gegebenenfalls mit ihr verrastbar und verfügt über ein Interface 6, 6' zur Anpassung der elektrischen Spezifikationen eines an der Freisprecheinrichtung zu betreibenden Mobilfunkendgerätes 4, 4' an die der Steuereinheit 1. Wenigstens einer der Adapter 3, 3' dient, wie in der Zeichnung dargestellt, zum drahtlosen Betreiben eines entsprechenden Mobilfunkendgerätes 4 mit der Telekommunikationseinrichtung. In erfindungswesentlicher Weise ist in diesem Adapter 3 eine Mobilfunksende- und Empfangseinheit 7 untergebracht. Weiterhin sind gemäß dem dargestellten Beispiel in der Steuereinheit 1, in der Grundplatte 2 oder dem Adapter 3 Speichermittel 12 zur Speicherung der Einträge eines elektronischen Telefonbuchs vorgesehen. Vorzugsweise ist die entsprechende Speichereinheit 12 in der Steuereinheit 1 angeordnet. Ein Nutzer der Telekommunikationseinrichtung meldet sich mit seinem drahtlos mit der Freisprecheinrichtung zu betreibenden Mobilfunkendgerät 4, beispielsweise einem Bluetooth-Handy, an der Einrichtung an. Sofern nicht bereits geschehen, weil eventuell vorher ein anderes Mobilfunkendgerät mit der Telekommunikationseinrichtung benutzt wurde, bringt er zuvor den für sein Mobilfunkendgerät 4 geeigneten Adapter 3 mit der Adapteraufnahme 2 in Eingriff. Gegebenenfalls wird nach dem Anmelden an der Freisprecheinrichtung der Inhalt eines in dem Mobilfunkendgerät 4 gehaltenen elektronischen Telefonbuchs über die Datenschnittstellen, respektive Sende- und Empfangseinheiten 8, 9 in einen Speicher 12 der Freisprecheinrichtung übertragen. Sofern der Adapter 3 selbst über einen entsprechenden (nicht flüchtigen) Speicher verfügt, ist dies jedoch möglicherweise nicht erforderlich. Denkbar ist es aber auch, dass die entsprechenden Daten bereits bei einer früheren Benutzung des Mobilfunkendgerätes 4 mit der Telekommunikationseinrichtung in einen entsprechenden Speicher 12 übertragen wurden und in diesem Speicher 12 die Telefonbücher mehrerer Mobilfunkendgeräte gehalten werden, wobei jeweils das Telefonbuch für das aktuell mit der Freisprecheinrichtung betriebene Gerät aktiviert wird. Die Identifizierung des Mobilfunkendgerätes 4 erfolgt dabei anhand seiner SIM-Karte. Im Falle der Benutzung eines Adapters 3 und eines Mobilfunkendgerätes 4, also eines drahtlos zu betreibenden Mobilfunkendgerätes 4, erfolgt während der Nutzung des Mobilfunknetzes die Modulation der Trägerfrequenz beim Senden von Nachrichten und die Demodulation bei deren Empfang ausschließlich mittels der Mobilfunksende- und -empfangseinheit 7 in dem Adapter 3. Sieht man einmal von den bei der Benutzung des Mobilfunknetzes erforderlichen Authentifizierungsvorgängen und den damit zusammenhängenden Zugriffen auf die SIM-Karte des Mobilfunkendgerätes 4 ab, wird das Mobilfunkendgerät 4 selbst insoweit für die Telekommunikation im Grunde nicht mehr benötigt, wobei jedoch bei seiner Entfernung aus dem Fahrzeug ein Logout aus dem System bzw. ein Abmelden der zugehörigen SIM-Karte bei der Steuereinheit 1 erfolgt.

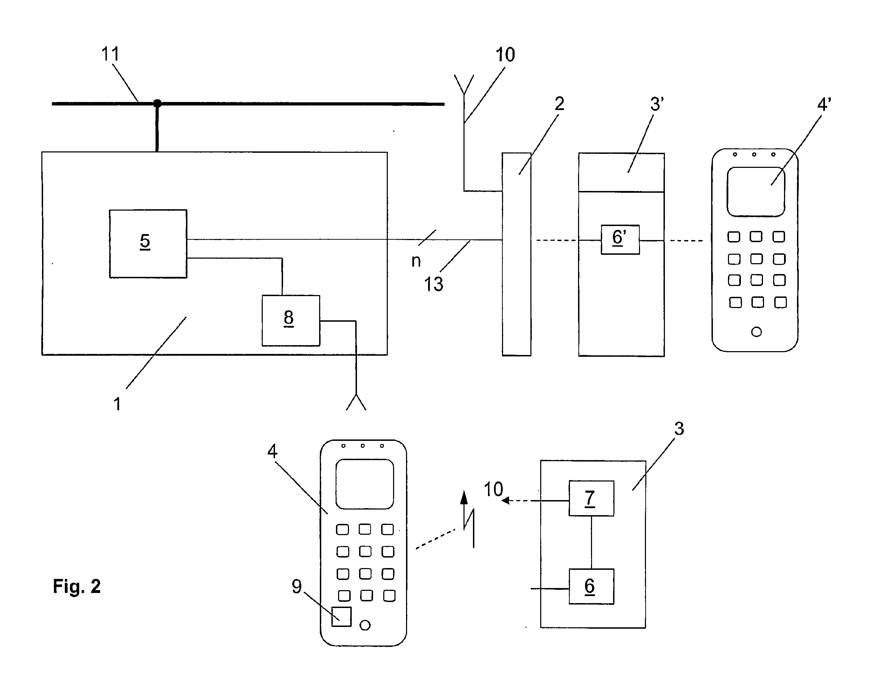

Die Lösung nach der Fig. 2 unterscheidet sich von der nach der Fig. 1 nur dadurch, dass bei dieser Variante die Sende- und Empfangseinheit 8 der Telekommunikationseinrichtung für den drahtlosen Datenaustausch mit einem Mobilfunkendgerät 4 nicht im Adapter 3 sondern in der Grundeinheit 1, 2 angeordnet ist. In dieser Ausführungsform könnte die Telekomunikationseinrichtung mit einem drahtlos an ihr zu betreibenden Mobilfunkendgerät 4 grundsätzlich auch ohne den Adapter 3 benutzt und für die Telekommunikation auf die Mobilfunksende- und -empfangseinheit des Mobilfunkendgerätes 4 zurückgegriffen werden. Im Hinblick auf eine weitere Reduzierung elektromagnetischer Strahlung im Fahrzeuginnenraum ist jedoch einer Benutzung mit einem Adapter 3 und seiner Mobilfunksende- und -empfangseinheit 7 der Vorzug zu geben. Dabei ist es auch denkbar, dass das Mobilfunkendgerät 4 wahlweise unter Nutzung der eigenen Mobilfunksende- und -empfangseinheit 7 oder einer entsprechenden Einheit im Adapter 3 mit der Telekommunikationseinrichtung betrieben wird, wobei dann gegebenenfalls in bzw. an der Steuereinheit 1 ein entsprechendes Management und Bedienelemente für die Auswahl der jeweils zu benutzenden Mobilfunksende- und Empfangseinheit vorgesehenen 7 sein müssen.

Die Telekommunikationseinrichtung ist somit universell im Grunde für alle Typen von Mobilfunkendgeräten 4,4' einsetzbar. Insbesondere können bei Verwendung eines Adapters 3 unter Nutzung des erfinderischen Konzepts auch Bluetooth-Handys, welche das Sim-Access-Profile (SAP) bzw. ein entsprechendes Profil unterstützen, mit einer ursprünglich nur für die drahtgebundene Ankopplung von Mobilfunkendgeräten 4' ausgebildeten Steuereinheit 1 genutzt werden.

### Liste der verwendeten Bezugszeichen

- 1: Steuereinheit
- 2: Adapteraufnahme (Grundplatte)
- 3: Adapter für drahtgebundene Nutzung
- 3': Adapter für drahtlose Nutzung
- 4, 4': Mobilfunkendgerät (Mobiltelefon bzw. Handy)
- 5: Steuerelektronik
- 6, 6': Interface
- 7: Mobilfunksende- und Empfangseinheit
- 8: Sende- und Empfangseinheit für drahtlosen Datenaustausch
- 9: Sende- und Empfangseinheit für drahtlosen Datenaustausch
- 10: (externe) Antenne
- 11: Fahrzeugbus
- 12: Speichermittel (Speichereinheit)
- 13: Kabel

## Patentansprüche

1. Telekommunikationseinrichtung zum wahlweise drahtgebundenen oder drahtlosen Betreiben von Mobilfunkendgeräten (4, 4') unterschiedlichen Gerätetyps mit der Telekommunikationseinrichtung in einem Kraftfahrzeug, bestehend aus einer bezüglich des jeweils zu betreibenden Mobilfunkendgerätes (4, 4') typunabhängigen Grundeinheit (1, 2) und einem von mehreren typspezifischen Adaptern (3, 3'), welche jeweils den Betrieb eines Mobilfunkendgerätes (4, 4') eines bestimmten Gerätetyps oder eines Mobilfunkendgerätes (4, 4') aus einer Gruppe von Gerätetypen mit der Grundeinheit (1, 2) ermöglichen, wobei die Grundeinheit (1, 2) von einer im Kraftfahrzeug angeordneten Steuereinheit (1) mit Steuerelektronik (5) und einer elektrisch mit ihr verbundenen Adapteraufnahme (2) sowie einer mit den vorgenannten Einheiten verbundenen Antenne (10) gebildet ist und jeder Adapter (3, 3') über ein Interface (6, 6') zur Anpassung der elektrischen Spezifikationen eines Mobilfunkendgerätes (4, 4') an die Steuereinheit (1) verfügt und wobei wenigstens ein Adapter (3) zum drahtlosen Betreiben eines Mobilfunkendgerätes (4) mit der Telekommunikationseinrichtung ausgebildet ist, **dadurch gekennzeichnet, dass** der Adapter (3) zum drahtlosen Betreiben eines das SAP, das heißt das Sim-Access-Profile unterstützenden Mobilfunkendgerätes (4) ausgebildet ist, über eine Mobilfunksende- und -empfangseinheit (7) verfügt und ebenso wie ein Adapter (3') zur drahtgebundenen Nutzung der Telekommunikationseinrichtung mechanisch und elektrisch mit der Adapteraufnahme (2) in Eingriff gebracht wird und dass während des drahtlosen Betriebes eines entsprechenden Mobilfunkendgerätes (4) mit der Telekommunikationseinrichtung zum Zweck der Telekommunikation in einem Mobilfunknetz die Modulation der Trägerfrequenz beim Senden von Nachrichten und die Demodulation bei deren Empfang ausschließlich durch die Mobilfunksende- und -empfangseinheit (7) des Adapters (3) zum drahtlosen Betreiben erfolgt.

2. Telekommunikationseinrichtung nach Anspruch 1, **dadurch gekennzeichnet, dass** dieses als Freisprecheinrichtung ausgebildet ist.

3. Telekommunikationseinrichtung nach Anspruch 1 oder 2, **dadurch gekennzeichnet, dass** in dem Adapter (3) eine Sende- und Empfangseinheit (8) für einen mit einer korrespondieren Sende- und Empfangseinheit (9) des Mobilfunkendgerätes (4) per Funk erfolgenden Datenaustausch angeordnet ist.

4. Telekommunikationseinrichtung nach Anspruch 1 oder 2, **dadurch gekennzeichnet, dass** eine Sende- und Empfangseinheit (8) für einen mit einer korrespondieren Sende- und Empfangseinheit (9) des Mobilfunkendgerätes (4) per Funk erfolgenden Datenaustausch in der Steuereinheit (1) angeordnet ist.

5. Telekommunikationseinrichtung nach Anspruch 3 oder 4, **dadurch gekennzeichnet, dass** es sich bei den Sende- und Empfangseinheiten (8, 9) für den drahtlosen Datenaustausch per Funk um Schnittstelleneinheiten für eine Datenübertragung entsprechend dem Bluetooth-Standard handelt.

6. Telekommunikationseinrichtung nach Anspruch 1 oder 2, **dadurch gekennzeichnet, dass** wenigstens einer der Adapter (3, 3') zur drahtgebundenen Ankopplung eines Mobilfunkendgerätes (4') ausgebildet und dass dieser Adapter (3') in seiner geometrischen Gestaltung derart an ein Mobilfunkendgerät (4') angepasst ist, dass das an die Telekommunikationseinrichtung angekoppelte Mobilfunkendgerät (4') mittels des Adapters (3') temporär am Kraftfahrzeug festgelegt ist.

7. Telekommunikationseinrichtung nach einem der Ansprüche 1 bis 6, **dadurch gekennzeichnet, dass** in der Grundeinheit (1, 2) Speichermittel (12) angeordnet sind, in denen Konfigurationsdaten, wie Einträge eines elektronischen Telefonbuchs, speicherbar sind, welche aus einem mit der Freisprecheinrichtung betriebenen Mobilfunkendgerät (4, 4') übernommen werden, wobei die Daten im Falle eines drahtlos mit der Telekommunikationseinrichtung betriebenen Mobilfunkendgerätes (4) vermittels der Sende- und Empfangseinheiten (8, 9) in den Speicher (12) übertragen werden.

8. Telekommunikationseinrichtung nach einem der Ansprüche 1 bis 5, **dadurch gekennzeichnet, dass** in dem Adapter (3) zum drahtlosen Betreiben eines Mobitfunkendgerätes (4) mit der Telekommunikationseinrichtung Speichermittel (12) zum Speichern von Konfigurationsdaten, wie Einträge eines aus dem Mobilfunkgerät ausgelesenen elektronischen Telefonbuchs angeordnet sind.

9. Telekommunikationseinrichtung nach einem der Ansprüche 1 bis 8, **dadurch gekennzeichnet, dass** der jeweils zum Betrieb eines Mobilfunkendgerätes (4, 4') zu verwendende Adapter (3, 3') mit der Adapteraufnahme (2) in einen rastenden Eingriff bringbar ist.

10. Telekommunikationseinrichtung nach einem der Ansprüche 1 bis 8, **dadurch gekennzeichnet, dass** die Steuereinheit (1) als eine mit einem Fahrzeugbus (11) verbindbare Elektronikbox ausgebildet ist.

## Claims

1. Telecommunication device for wire-bound or wireless, according to choice, operation of mobile communication terminals (4, 4') of different device types with the telecommunication device in a motor vehicle, consisting of a base unit (1, 2) which is type-independent with reference to the mobile communication terminal (4, 4') to be operated, and one of multiple type-specific adapters (3, 3'), each of which makes it possible to operate a mobile communication terminal (4, 4') of a specified device type, or a mobile communication terminal (4, 4') from a group of device types, with the base unit (1, 2), the base unit (1, 2) being formed of a control unit (1), which is arranged in the motor vehicle, with control electronics (5), and a adapter retainer (2) which is connected electrically to it, and an aerial (10) which is connected to the above-mentioned units, and each adapter (3, 3') having an interface (6, 6') to adapt the electrical specifications of a mobile communication terminal (4, 4') to the control unit (1), and at least one adapter (3) being of a form for wireless operation of a mobile communication terminal (4) with the telecommunication device, **characterized in that** the adapter (3) is of a form for wireless operation of a mobile communication terminal (4) which supports the SAP, i.e. the SIM access profile, has a mobile communication transmission and reception unit (7), and like an adapter (3') is brought to engage mechanically and electrically with the adapter retainer (2) for wire-bound use of the telecommunication device, and **in that** during wireless operation of a corresponding mobile communication terminal (4) with the telecommunication device for the purpose of telecommunication in a mobile communication network, the modulation of the carrier frequency on transmission of messages, and the demodulation on receiving them, are carried out exclusively by the mobile communication transmission and reception unit (7) of the adapter (3) for wireless operation.

2. Telecommunication device according to Claim 1, **characterized in that** it is in the form of a hands-free device.

3. Telecommunication device according to Claim 1 or 2, **characterized in that** in the adapter (3), a transmission and reception unit (8) is arranged for a data exchange which takes place by radio with a corresponding transmission and reception unit (9) of the mobile communication terminal (4).

4. Telecommunication device according to Claim 1 or 2, **characterized in that** a transmission and reception unit (8) is arranged in the control unit (1) for a data exchange which takes place by radio with a corresponding transmission and reception unit (9) of the mobile communication terminal (4).

5. Telecommunication device according to Claim 3 or 4, **characterized in that** the transmission and reception units (8, 9) for wireless data exchange by radio are interface units for data transmission according to the Bluetooth standard.

6. Telecommunication device according to Claim 1 or 2, **characterized in that** at least one of the adapters (3, 3') is in a form for wireless connection to a mobile communication terminal (4'), and that the geometrical shape of this adapter (3') is adapted to a mobile communication terminal (4') in such a way that the mobile communication terminal (4') which is connected to the telecommunication device is fixed temporarily to the motor vehicle by means of the adapter (3').

7. Telecommunication device according to one of Claims 1 to 6, **characterized in that** in the base unit (1, 2), storage means (12) are arranged, and in them configuration data such as entries of an electronic telephone book can be stored, and are taken from a mobile communication terminal (4, 4') which is operated with the hands-free device, the data being transferred into the memory (12) by means of the transmission and reception units (8, 9) in the case of a mobile communication terminal (4) which is operated wirelessly with the telecommunication device.

8. Telecommunication device according to one of Claims 1 to 5, **characterized in that** in the adapter (3) for wireless operation of a mobile communication terminal (4) with the telecommunication device, storage means (12) for storing configuration data such as entries from an electronic telephone book which is read out of the mobile communication terminal are arranged.

9. Telecommunication device according to one of Claims 1 to 8, **characterized in that** the adapter (3, 3') to be used for operation of a mobile communication terminal (4, 4') can be brought into a locking engagement with the adapter retainer (2).

10. Telecommunication device according to one of Claims 1 to 8, **characterized in that** the control unit (1) is in the form of an electronic box which can be connected to the vehicle bus (11).

## Revendications

1. Dispositif de télécommunication pour faire fonctionner avec ou sans fil, au choix, des terminaux de radiocommunication mobiles (4, 4') de types d'appareil différents avec le dispositif de télécommunication dans un véhicule automobile, composé d'une unité de base (1, 2) indépendante du type de terminal de radiocommunication mobile (4, 4') respectif à faire fonctionner et d'un adaptateur (3, 3') parmi plusieurs types spécifiques au type, lesquels permettent à chaque fois de faire fonctionner un terminal de radiocommunication mobile (4, 4') d'un type d'appareil donné ou d'un terminal de radiocommunication mobile (4, 4') d'un groupe de types d'appareil avec l'unité de base (1, 2), l'unité de base (1, 2) étant constituée d'une unité de commande (1) munie d'une électronique de commande (5) disposée dans le véhicule automobile et d'un logement d'adaptateur (2) relié avec elle électriquement ainsi que d'une antenne (10) reliée avec les unités mentionnées précédemment et chaque adaptateur (3, 3') disposant d'une interface (6, 6') pour adapter les spécifications électriques d'un terminal de radiocommunication mobile (4, 4') à l'unité de commande (1), et au moins un adaptateur (3) étant configuré pour le fonctionnement sans fil d'un terminal de radiocommunication mobile (4) avec le dispositif de télécommunication, **caractérisé en ce que** l'adaptateur (3) est configuré pour le fonctionnement sans fil d'un terminal de radiocommunication mobile (4) qui prend en charge le SAP, c'est-à-dire le profil d'accès à une carte SIM (Sim-Access-Profile), dispose d'une unité d'émission et de réception radioélectrique mobile (7) et, tout comme un adaptateur (3'), est amené en prise mécanique et électrique avec le logement d'adaptateur (2) pour l'utilisation filaire du dispositif de télécommunication et que pendant le fonctionnement sans fil d'un terminal de radiocommunication mobile (4) correspondant avec le dispositif de télécommunication à des fins de télécommunication dans un réseau de radiocommunication mobile, la modulation de la fréquence porteuse lors de l'émission de messages et la démodulation lors de leur réception s'effectuent exclusivement par l'unité d'émission et de réception radioélectrique mobile (7) de l'adaptateur (3) pour le fonctionnement sans fil.

2. Dispositif de télécommunication selon la revendication 1, **caractérisé en ce que** celui-ci est réalisé sous la forme d'un dispositif de conversation mains libres.

3. Dispositif de télécommunication selon la revendication 1 ou 2, **caractérisé en ce qu'**une unité d'émission et de réception (8) pour un échange de données réalisé par voie hertzienne avec une unité d'émission et de réception (9) correspondante du terminal de radiocommunication mobile (4) est disposée dans l'adaptateur (3).

4. Dispositif de télécommunication selon la revendication 1 ou 2, **caractérisé en ce qu'**une unité d'émission et de réception (8) pour un échange de données réalisé par voie hertzienne avec une unité d'émission et de réception (9) correspondante du terminal de radiocommunication mobile (4) est disposée dans l'unité de commande (1).

5. Dispositif de télécommunication selon la revendication 3 ou 4, **caractérisé en ce que** les unités d'émission et de réception (8, 9) pour l'échange de données sans fil par voie hertzienne sont des unités d'interface pour une transmission de données conformément à la norme Bluetooth.

6. Dispositif de télécommunication selon la revendication 1 ou 2, **caractérisé en ce qu'**au moins l'un des adaptateurs (3, 3') est configuré pour la connexion filaire d'un terminal de radiocommunication mobile (4') et que la forme géométrique de cet adaptateur (3') est adaptée à celle d'un terminal de radiocommunication mobile (4') de telle sorte que le terminal de radiocommunication mobile (4') connecté au dispositif de télécommunication est fixé temporairement au véhicule automobile au moyen de l'adaptateur (3').

7. Dispositif de télécommunication selon l'une des revendications 1 à 6, **caractérisé en ce que** des moyens de mémorisation (12) sont disposés dans l'unité de base (1, 2), dans lesquels peuvent être enregistrées des données de configuration telles que les contacts d'un répertoire téléphonique, lesquelles peuvent être récupérées depuis un terminal de radiocommunication mobile (4, 4') qui fonctionne avec le dispositif de conversation mains libres, les données étant transmises dans la mémoire (12) au moyen des unités d"émission et de réception (8, 9) dans le cas d'un terminal de radiocommunication mobile (4) qui fonctionne sans fil avec le dispositif de télécommunication.

8. Dispositif de télécommunication selon l'une des revendications 1 à 5, **caractérisé en ce que** des moyens de mémorisation (12) destinés à mémoriser des données de configuration telles que les contacts d'un répertoire téléphonique lu depuis le terminal de radiocommunication mobile sont disposés dans l'adaptateur (3) destiné au fonctionnement sans fil d'un terminal de radiocommunication mobile (4) avec le dispositif de télécommunication.

9. Dispositif de télécommunication selon l'une des revendications 1 à 8, **caractérisé en ce que** l'adaptateur (3, 3') à utiliser respectivement pour faire fonctionner un terminal de radiocommunication mobile (4, 4') peut être amené en prise enclenchée avec le logement d'adaptateur (2).

10. Dispositif de télécommunication selon l'une des revendications 1 à 8, **caractérisé en ce que** l'unité de commande (1) est réalisée sous la forme d'un coffret électronique qui peut être relié au bus du véhicule (11).
